# EUROPEAN PATENT SPECIFICATION

(11) **EP 3 590 678 B1**
(45) Date of publication and mention of the grant of the patent: **17.11.2021**
(21) Application number: 18760905.2
(22) Date of filing: 28.02.2018
(51) Int. Cl.: B29C 45/17, B29C 45/50, H02K 5/24, H02K 5/26, F16H 7/14, B29C 45/40

(54) **INJECTION MOLDING MACHINE**
SPRITZGIESSMASCHINE
MACHINE DE MOULAGE PAR INJECTION

(30) Priority: 28.02.2017 JP 2017037775
(43) Date of publication of application: 08.01.2020
(73) Proprietor: Sumitomo Heavy Industries, Ltd., Tokyo 141-6025 (JP)
(72) Inventor: HATAKEYAMA, Takuro, Chiba-shi Chiba 263-0001 (JP)
(74) Representative: Louis Pöhlau Lohrentz
(86) International application number: PCT/JP2018/007649
(87) International publication number: WO 2018/159722

(56) References cited:
- CN-A- 105 599 223
- CN-U- 203 289 250
- CN-U- 204 046 333
- JP-A- H10 109 324
- JP-A- H11 138 598
- JP-A- 2001 225 345
- JP-A- 2006 021 338
- JP-A- 2015 182 361
- US-A- 3 789 686

## Description

### Technical Field

The present invention relates to an injection molding machine.

### Background Art

An injection unit of an injection molding machine described in PTL 1 transmits the rotation of a plasticizing motor to a screw by a power transmission unit including a timing pulley and a timing belt. The screw is rotatably supported by an attachment member to which a plasticizing motor is attached. In a plasticizing process, when the plasticizing motor is energized, a rotating shaft is rotated via the power transmission unit, the screw integrally connected thereto is rotated, and a material resin is accumulated and plasticized in front of the screw. PTL 2 discloses an adjustable bore diameter motor cabinet. PTL 3 discloses a motor base for fixing a motor. PTL 4 discloses a device which maintains constant spacing between the centers of an output shaft of a resiliently mounted motor and the input shaft of a mechanism that is drivingly connected to the output shaft by a transmission assembly. PTL 5 discloses an injection molding machine which includes a plurality of various pulleys and belts connected to the pulleys. PTL 6 discloses an electric type pre-plasticizing structure which includes linear guide rails, a synchronous belt, a stator integration body and a rotor integration body.

### Citation List

### Patent Literature

[PTL 1] Japanese Unexamined Patent Publication No. H11-138598
[PTL 2] Chinese Utility Model No. 204046333
[PTL 3] Chinese Utility Model No. 203289250
[PTL 4] United States Patent No. 3789686
[PTL 5] Japanese Unexamined Patent Publication No. 2006-021338
[PTL 6] Chinese Unexamined Patent Publication No. 105599223

### Summary of Invention

### Technical Problem

The plasticizing motor of Patent Document 1 is fixed to the attachment member, and it is difficult to adjust a tension of the timing belt.

In order to cause the tension of the belt to be adjusted, it is necessary to provide a space where the motor is moved in an axis perpendicular direction perpendicular to a rotation axis direction of the motor, around the motor. The space around the motor may be used as a space for maintenance work. Due to the space, vibration of the motor is likely to occur.

The vibration of the motor may become a cause of damage to an encoder of the motor. The vibration of the motor is particularly significant in molding that requires high torque and high cycle molding.

The present invention has been made in view of the above problems, and a main object thereof is to provide an injection molding machine capable of adjusting a tension of a belt and reducing vibration of a motor that drives the belt.

### Solution to Problem

In order to solve the above problems, according to an aspect of the present invention, there is provided an injection molding machine including: a motor including a stator, a rotor which is rotated relative to the stator, and an encoder that detects rotation of the rotor; a rotating member disposed parallel to a rotating shaft of the motor with a gap from the motor in an axis perpendicular direction perpendicular to a rotation axis direction of the motor; a belt which transmits a rotational driving force of the rotating shaft of the motor to the rotating member;
an attachment base to which the motor is attached; and a motor support tool which supports the motor with respect to the attachment base, in which the motor support tool includes a pair of clamping portions which clamp the motor from both sides in a direction perpendicular to the rotation axis direction of the motor.

### Advantageous Effects of Invention

According to the aspect of the present invention, the injection molding machine capable of adjusting a tension of the belt and reducing vibration of the motor that drives the belt is provided.

### Brief Description of Drawings

Fig. 1 is a view showing a state when mold opening of an injection molding machine according to an embodiment is completed.
Fig. 2 is a view showing a state at the time of mold clamping of the injection molding machine according to the embodiment.
Fig. 3 is a plan view showing a structure of an injection unit according to the embodiment.
Fig. 4 is a cross-sectional view of the injection unit taken along line IV-IV in Fig. 3.
Fig. 5 is a cross-sectional view of the injection unit taken along line V-V in Fig. 3.
Fig. 6 is a cross-sectional view of the injection unit taken along line VI-VI in Fig. 3.
Fig. 7A is a perspective view showing a plasticizing motor support tool which supports a plasticizing motor with respect to a movable plate according to the embodiment.
Fig. 7B is a perspective view showing a state in which the plasticizing motor is supported by the plasticizing motor support tool shown in Fig. 7A.
Fig. 7C is a rear view showing the state in which the plasticizing motor is supported by the plasticizing motor support tool shown in Fig. 7A.
Fig. 8 is a cross-sectional view showing an attachment structure of an ejector motor to a movable platen according to another embodiment.

### Description of Embodiments

Hereinafter, embodiments of the present invention will be described with reference to the drawings. In each of the drawings, the same or corresponding components are denoted by the same or corresponding reference numerals, and description thereof is omitted.

### (Injection Molding Machine)

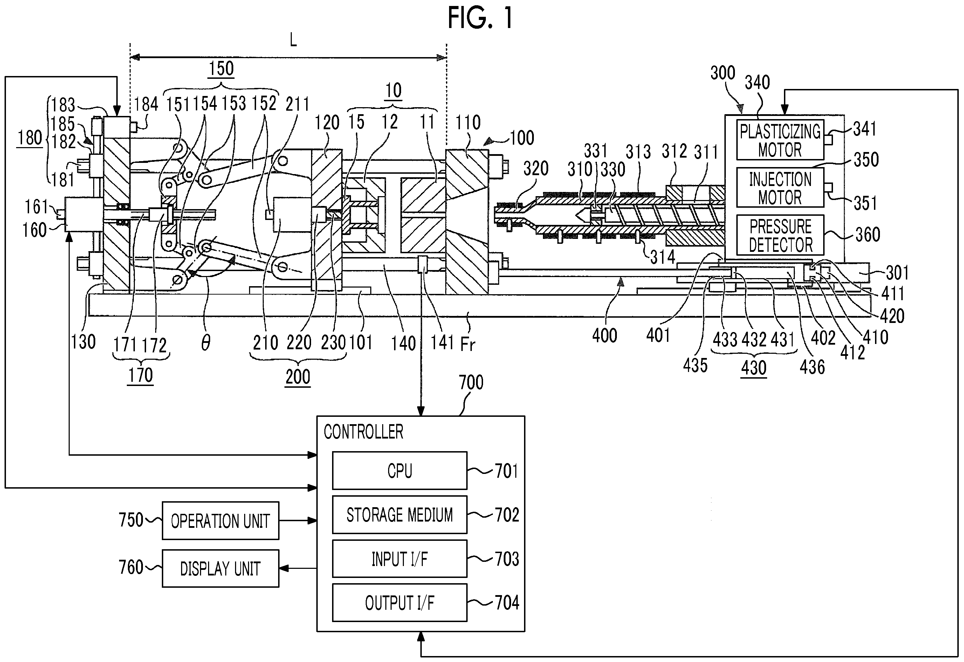

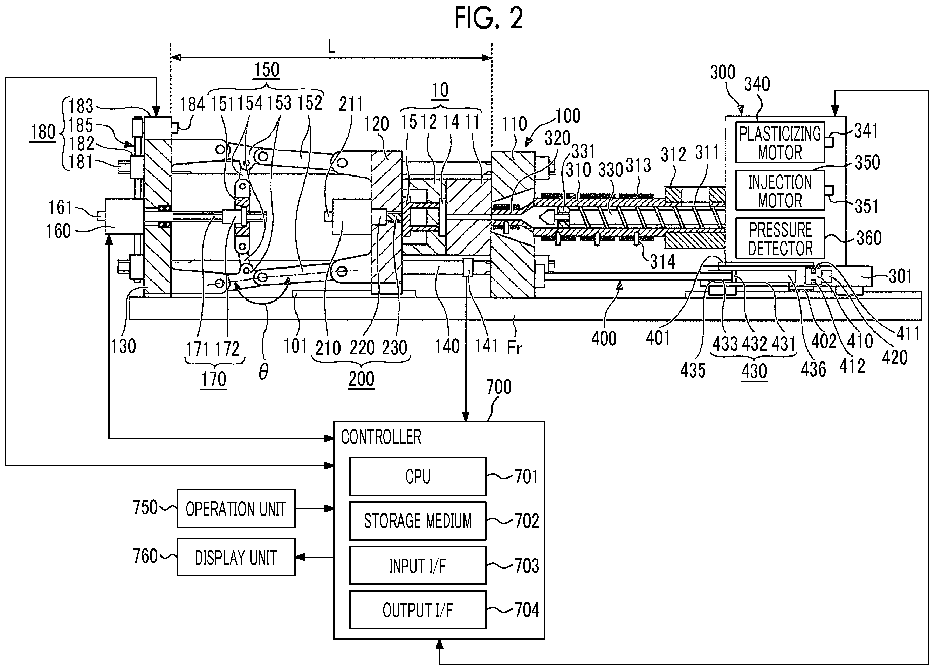

Fig. 1 is a view showing a state when mold opening of an injection molding machine according to an embodiment is completed. Fig. 2 is a view showing a state at the time of mold clamping of the injection molding machine according to the embodiment. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of the injection molding machine. As shown in Figs. 1 and 2, the injection molding machine includes a mold clamping unit 100, an ejector unit 200, an injection unit 300, a movement unit 400, a controller 700, and a frame Fr. Hereinafter, each component of the injection molding machine will be described.

### (Mold Clamping Unit)

In descriptions of the mold clamping unit 100, a movement direction (for example, a right direction in Figs. 1 and 2) of a movable platen 120 when a mold is closed is defined as a front side, and a movement direction (a left direction in Figs. 1 and 2) of the movable platen 120 when the mold is opened is defined as a rear side.

The mold clamping unit 100 performs mold closing, mold clamping, and mold opening of a mold unit 10. For example, the mold clamping unit 100 is a horizontal type mold clamping unit, and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, mold closing, mold clamping, and mold opening are performed. The mold unit 10 is constituted by the stationary mold 11 and the movable mold 12.

The toggle support 130 is connected to the stationary platen 110 with a gap therebetween, and is placed on the frame Fr to be movable in the mold opening and closing directions. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. Each of the tie bars 140 is parallel to the mold opening and closing directions and extends according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, an oil hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected to each other by pins or the like . The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing step, a mold clamping step, a mold opening step, or the like under a control of the controller 700.

In the mold closing step, the mold clamping motor 160 is driven to move the crosshead 151 forward to a mold closing completion position at a set speed. Accordingly, the movable platen 120 moves forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping step, the mold clamping motor 160 is further driven to further move the crosshead 151 forward from the mold closing completion position to a mold clamping position, and thus, a mold clamping force is generated. When the mold is clamped, a cavity space 14 (see Fig. 2) is formed between the movable mold 12 and the stationary mold 11, and the cavity space 14 is filled with a liquid molding material by the injection unit 300. A filled molding material is solidified, and thus, a molding product can be obtained. A plurality of cavity spaces 14 may be provided, and in this case, a plurality of molding products are obtained simultaneously.

In the mold opening step, the mold clamping motor 160 is driven to move the crosshead 151 rearward to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing step and the mold clamping step are collectively set as a series of setting conditions. For example, the speed or positions (including mold closing start position, speed switching position, mold closing completion position, and mold clamping position) and the mold clamping force of the crosshead 151 in the mold closing step and the mold clamping step are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set. Setting conditions are similarly set in the mold opening step. For example, the speed or positions (including mold opening start position, speed switching position, and mold opening completion position) of the crosshead 151 in the mold opening step are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold closing start position are the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 10 is changed by a change of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a mold touch where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is held to be rotatable by the toggle support 130, and a mold space adjustment motor 183 which rotates the screw nut 182 screwed to the screw shaft 181.

The screw shaft 181 and the screw nut 182 are provided for each of the tie bars 140. Rotation of the mold space adjustment motor 183 may be transmitted to a plurality of screw nuts 182 a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each of the screw nuts 182, a drive gear is attached to an output shaft of the mold space adjustment motor 183, an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, thereby adjusting the position of the toggle support 130 that rotatably holds the screw nut 182 with respect to the stationary platen 110 and adjusting the gap L between the stationary platen 110 and the toggle support 130.

In the present embodiment, the screw nut 182 is rotatably held by the toggle support 130, and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, the gap L can be adjusted by rotating the screw nut 182.

In addition, the screw nut 182 may be fixed to the toggle support 130, and the tie bar 140 may be rotatably held by the stationary platen 110. In this case, the gap L can be adjusted by rotating the tie bar 140.

Furthermore, the screw nut 182 may be fixed to the stationary platen 110, and the tie bar 140 may be rotatably held by the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 adjusts the gap L by rotating one of the screw shaft 181 and the screw nut 182 which are screwed together. A plurality of mold space adjustment mechanisms 180 may be used, and a plurality of mold space adjustment motors 183 may be used.

The mold space adjustment mechanism 180 of the present embodiment has the screw shaft 181 formed on the tie bar 140 and the screw nut 182 screwed to the screw shaft 181 in order to adjust the gap L, but the present invention is not limited to this.

For example, the mold space adjustment mechanism 180 may include a tie bar temperature controller that adjusts the temperature of the tie bar 140. The tie bar temperature controller is attached to each of the tie bars 140 and adjusts the temperature of the plurality of tie bars 140 in cooperation with each other. As the temperature of the tie bar 140 increases, the tie bar 140 becomes longer due to thermal expansion, and the gap L increases. The temperatures of the plurality of tie bars 140 can be adjusted independently.

The tie bar temperature controller includes a heater such as a heater, and adjusts the temperature of the tie bar 140 by heating. The tie bar temperature controller may include a cooler such as a water cooling jacket, and may adjust the temperature of the tie bar 140 by cooling. The tie bar temperature controller may include both the heater and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are an up-down direction. The vertical type mold clamping unit includes a lower platen, an upper platen, a toggle support, a tie bar, a toggle mechanism, a mold clamping motor, and the like. One of the lower platen and the upper platen is used as a stationary platen, and the other is used as a movable platen. A lower mold is attached to the lower platen, and an upper mold is attached to the upper platen. The lower mold and the upper mold constitute a mold unit. The lower mold may be attached to the lower platen via a rotary table. The toggle support is disposed below the lower platen and connected to the upper platen via the tie bar. The upper platen and the toggle support are connected to each other with a gap therebetween in the mold opening and closing directions by the tie bar. The toggle mechanism is disposed between the toggle support and the lower platen and lifts and lowers the movable platen. The mold clamping motor operates the toggle mechanism. In the case where the mold clamping unit is a vertical type mold clamping unit, the number of tie bars is usually three. The number of tie bars is not particularly limited.

In addition, the mold clamping unit 100 of the present embodiment has the mold clamping motor 160 as a drive source. However, the mold clamping unit 100 may have an oil hydraulic cylinder instead of the mold clamping motor 160. In addition, the mold clamping unit 100 may have a linear motor for opening and closing a mold and may have an electromagnet for clamping a mold.

### (Ejector Unit)

In descriptions of the ejector unit 200, as in the description of the mold clamping unit 100, a movement direction (for example, a right direction in Figs. 1 and 2) of the movable platen 120 when the mold is closed is defined as a front side, and a movement direction (a left direction in Figs. 1 and 2) of the movable platen 120 when the mold is opened is defined as a rear side.

The ejector unit 200 ejects the molding product from the mold unit 10. The ejector unit 200 includes an ejector motor 210, a motion conversion mechanism 220, an ejector rod 230, and the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 is movable forward or rearward in a through-hole of the movable platen 120. A front end portion of the ejector rod 230 is in contact with a movable member 15 which is disposed inside the movable mold 12 so as to be movable forward or rearward. The front end portion of the ejector rod 230 may be connected to or may not be connected to the movable member 15.

The ejector unit 200 performs an ejection step under the control of the controller 700.

In the ejection step, the ejector motor 210 is driven to move the ejector rod 230 forward from a standby position to an ejection position at a set speed, and thus, the movable member 15 moves forward and the molding product is ejected. Thereafter, the ejector motor 210 is driven to move the ejector rod 230 rearward at a set speed, and thus, the movable member 15 moves rearward to an original standby position. For example, a position or speed of the ejector rod 230 is detected using an ejector motor encoder 211. The ejector motor encoder 211 detects the rotation of the ejector motor 210 and sends a signal indicating the detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

In description of the injection unit 300, unlike the description of the mold clamping unit 100 or the description of the ejector unit 200, a movement direction (for example, a left direction in Figs. 1 and 2) of a screw 330 during filling is defined as a front side, and a movement direction (a right direction in Figs. 1 and 2) of the screw 330 during plasticizing is defined as a rear side.

The injection unit 300 is installed on a slide base 301 that is movable forward or rearward with respect to the frame Fr, and is movable forward or rearward with respect to the mold unit 10. The injection unit 300 comes into contact with the mold unit 10, and the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material supplied to the inside from a supply port 311. The molding material includes, for example, a resin. For example, the molding material is formed in a pellet shape, and is supplied to the supply port 311 in a solid state. The supply port 311 is formed at a rear portion of the cylinder 310. A cooler 312 such as a water cooling cylinder is provided on an outer periphery of the rear portion of the cylinder 310. A heater 313 such as a band heater and a temperature detector 314 are provided on the outer periphery of the cylinder 310 on a side forward of the cooler 312.

The cylinder 310 is divided into a plurality of zones in an axial direction of the cylinder 310 (a left-right direction in Figs. 1 and 2). The heater 313 and the temperature detector 314 are provided in each zone. For each zone, the controller 700 controls the heater 313 such that a detection temperature of the temperature detector 314 becomes a set temperature.

The nozzle 320 is provided at a front end portion of the cylinder 310 and is pressed against the mold unit 10. The heater 313 and the temperature detector 314 are provided on an outer periphery of the nozzle 320. The controller 700 controls the heater 313 such that a detection temperature of the nozzle 320 becomes a set temperature.

The screw 330 is disposed in the cylinder 310 so as to be rotatable and movable forward or rearward. If the screw 330 is rotated, the molding material is sent forward along a spiral groove of the screw 330. The molding material is gradually melted by heat from the cylinder 310 while being sent forward. As the liquid molding material is sent forward of the screw 330 and accumulated in a front portion of the cylinder 310, the screw 330 is moved rearward. Thereafter, if the screw 330 is moved forward, the liquid molding material accumulated in front of the screw 330 is injected from the nozzle 320 and filled in the mold unit 10.

A backflow prevention ring 331 is attached to a front portion of the screw 330 as a backflow prevention valve that prevents a backflow of the molding material flowing from the front side to the rear side of the screw 330 when the screw 330 is pushed forward.

When the screw 330 is moved forward, the backflow prevention ring 331 is pushed rearward by a pressure of the molding material in front of the screw 330 and is moved rearward with respect to the screw 330 to a closing position (see Fig. 2) at which a flow path of the molding material is blocked. Accordingly, the molding material accumulated in front of the screw 330 is prevented from flowing rearward.

On the other hand, when the screw 330 is rotated, the backflow prevention ring 331 is pushed forward by the pressure of the molding material sent forward along the spiral groove of the screw 330 and is thus moved forward with respect to the screw 330 to an opening position (see Fig. 1) at which the flow path of the molding material is opened. Accordingly, the molding material is fed ahead of the screw 330.

The backflow prevention ring 331 may be either a co-rotating type ring that rotates together with the screw 330 or a non-co-rotating type ring that does not rotate together with the screw 330.

The injection unit 300 may have a drive source that causes the backflow prevention ring 331 to move forward or rearward between the opening position and the closing position with respect to the screw 330.

The plasticizing motor 340 rotates the screw 330. A drive source that rotates the screw 330 is not limited to the plasticizing motor 340, and may be an oil hydraulic pump, for example.

The injection motor 350 moves the screw 330 forward or rearward. A motion conversion mechanism that converts a rotary motion of the injection motor 350 into a linear motion of the screw 330 or the like is provided between the injection motor 350 and the screw 330. For example, the motion conversion mechanism includes a screw shaft and a screw nut which is screwed to the screw shaft. A ball or a roller may be provided between the screw shaft and the screw nut. A drive source that moves the screw 330 forward or rearward is not limited to the injection motor 350, and may be an oil hydraulic cylinder, for example.

The pressure detector 360 detects a pressure transmitted between the injection motor 350 and the screw 330. The pressure detector 360 is provided in a force transmission path between the injection motor 350 and the screw 330 and detects the pressure acting on the pressure detector 360.

The pressure detector 360 sends a signal indicating the detection result to the controller 700. The detection result of the pressure detector 360 is used to control and monitor a pressure received by the screw 330 from the molding material, a back pressure against the screw 330, a pressure acting on the molding material from the screw 330, or the like.

The injection unit 300 performs a plasticizing step, a filling step, a pressure holding step, or the like under a control of the controller 700.

In the plasticizing step, the plasticizing motor 340 is driven to rotate the screw 330 at a set rotational speed and send the molding material forward along the spiral groove of the screw 330. Accordingly, the molding material is gradually melted. As the liquid molding material is sent forward of the screw 330 and accumulated in a front portion of the cylinder 310, the screw 330 is moved rearward. For example, the rotational speed of the screw 330 is detected using a plasticizing motor encoder 341. The plasticizing motor encoder 341 detects the rotation of the plasticizing motor 340 and sends a signal indicating the detection result to the controller 700. A screw rotational speed detector which detects the rotational speed of the screw 330 is not limited to the plasticizing motor encoder 341, and a general detector can be used.

In the plasticizing step, a set back pressure may be applied to the screw 330 by driving the injection motor 350 in order to limit a rapid retreat of the screw 330. For example, the back pressure against the screw 330 is detected using the pressure detector 360. The pressure detector 360 sends a signal indicating the detection result to the controller 700. When the screw 330 is moved rearward to a plasticizing completion position and a predetermined amount of molding material is accumulated in front of the screw 330, the plasticizing step is completed.

In the filling step, the injection motor 350 is driven to move the screw 330 forward at a set speed and fill the cavity space 14 in the mold unit 10 with the liquid molding material accumulated in front of the screw 330. For example, a position or speed of the screw 330 is detected using an injection motor encoder 351 or the like. The injection motor encoder 351 detects the rotation of the injection motor 350 and sends a signal indicating the detection result to the controller 700. If the position of the screw 330 reaches a set position, switching from the filling step to the pressure holding step (so-called V/P switching) is performed. A position where the V/P switching is performed is also referred to as a V/P switching position. The set speed of the screw 330 may be changed according to the position, time, or the like of the screw 330.

In addition, after the position of the screw 330 reaches the set position in the filling step, the screw 330 may be temporarily stopped at the set position, and then the V/P switching may be performed. Immediately before the V/P switching, the screw 330 may be moved forward or rearward at a slow speed instead of stopping the screw 330. In addition, a screw position detector which detects the position of the screw 330 and a screw speed detector which detects the speed of the screw 330 are not limited to the injection motor encoder 351, and a general encoder can be used.

In the pressure holding step, the injection motor 350 is driven to push the screw 330 forward, maintain the pressure of the molding material at the front end portion of the screw 330 (hereinafter, also referred to as "holding pressure") at a set pressure, and push the molding material remaining in the cylinder 310 toward the mold unit 10. Insufficient molding material due to cooling shrinkage in the mold unit 10 can be replenished. For example, the holding pressure is detected using the pressure detector 360. The pressure detector 360 sends a signal indicating the detection result to the controller 700. A set value of the holding pressure may be changed according to an elapsed time from the start of the pressure holding step or the like.

In the pressure holding step, the molding material in the cavity space 14 in the mold unit 10 is gradually cooled, and when the pressure holding step is completed, an inlet of the cavity space 14 is closed with the solidified molding material. This state is called a gate seal, and the backflow of the molding material from the cavity space 14 is prevented. After the pressure holding step, a cooling step is started. In the cooling step, the molding material in the cavity space 14 is solidified. In order to shorten a molding cycle time, the plasticizing step may be performed during the cooling step.

In addition, the injection unit 300 of the present embodiment is an inline screw type injection unit, but may be a preplasticating type injection unit. A preplasticating type injection unit supplies a molding material melted in a plasticizing cylinder to an injection cylinder, and injects the molding material from the injection cylinder into a mold unit. In the plasticizing cylinder, a screw is disposed rotatably or rotatably and movable forward or rearward, and in the injection cylinder, a plunger is disposed to be movable forward or rearward.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the up-down direction. A mold clamping unit combined with the vertical type injection unit 300 may be a vertical type mold clamping unit or a horizontal type mold clamping unit. Similarly, a mold clamping unit combined with the horizontal type injection unit 300 may be a horizontal type mold clamping unit or a vertical type mold clamping unit.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the up-down direction. A mold clamping unit combined with the vertical type injection unit 300 may be a vertical type mold clamping unit or a horizontal type mold clamping unit. Similarly, a mold clamping unit combined with the horizontal type injection unit 300 may be a horizontal type mold clamping unit or a vertical type mold clamping unit.

### (Movement Unit)

In description of the movement unit 400, similarly to the description of the injection unit 300, a movement direction (for example, a left direction in Figs. 1 and 2) of the screw 330 during filling is defined as a front side, and a movement direction (a right direction in Figs. 1 and 2) of the screw 330 during plasticizing is defined as a rear side.

The movement unit 400 moves the injection unit 300 forward or rearward with respect to the mold unit 10. In addition, the movement unit 400 presses the nozzle 320 against the mold unit 10 to generate a nozzle touch pressure. The movement unit 400 includes a fluid hydraulic pump 410, a motor 420 as a drive source, a fluid hydraulic cylinder 430 as a fluid hydraulic actuator, and the like.

The fluid hydraulic pump 410 has a first port 411 and a second port 412. The fluid hydraulic pump 410 is a bi-directionally rotatable pump, and by switching a rotation direction of the motor 420, a working fluid (for example, oil) is suctioned from one of the first port 411 and the second port 412 and discharged from the other and a fluid hydraulic pressure is generated. The fluid hydraulic pump 410 can also suction the working fluid from a tank and discharge the working fluid from either the first port 411 or the second port 412.

The motor 420 operates the fluid hydraulic pump 410. The motor 420 drives the fluid hydraulic pump 410 with a rotational direction and rotational torque corresponding to a control signal from the controller 700. The motor 420 may be an electric motor or an electric servo motor.

The fluid hydraulic cylinder 430 includes a cylinder body 431, a piston 432, and a piston rod 433. The cylinder body 431 is fixed to the injection unit 300. The piston 432 divides an inside of the cylinder body 431 into a front chamber 435 as a first chamber and a rear chamber 436 as a second chamber. The piston rod 433 is fixed to the stationary platen 110.

The front chamber 435 of the fluid hydraulic cylinder 430 is connected to the first port 411 of the fluid hydraulic pump 410 via a first flow path 401. The working fluid discharged from the first port 411 is supplied to the front chamber 435 via the first flow path 401, whereby the injection unit 300 is pushed forward. The injection unit 300 is moved forward, and the nozzle 320 is pressed against the stationary mold 11. The front chamber 435 functions as a pressure chamber that generates the nozzle touch pressure of the nozzle 320 by the pressure of the working fluid supplied from the fluid hydraulic pump 410.

On the other hand, the rear chamber 436 of the fluid hydraulic cylinder 430 is connected to the second port 412 of the fluid hydraulic pump 410 via a second flow path 402. The working fluid discharged from the second port 412 is supplied to the rear chamber 436 of the fluid hydraulic cylinder 430 via the second flow path 402, whereby the injection unit 300 is pushed rearward. The injection unit 300 is moved rearward, and the nozzle 320 is separated from the stationary mold 11.

In the present embodiment, the movement unit 400 includes the fluid hydraulic cylinder 430, but the present invention is not limited to this. For example, instead of the fluid hydraulic cylinder 430, an electric motor and a motion conversion mechanism that converts a rotary motion of the electric motor into a linear motion of the injection unit 300 may be used.

### (Controller)

For example, the controller 700 is constituted by a computer, and as shown in Figs. 1 and 2, includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly manufactures molding products by repeatedly performing a mold closing step, a mold clamping step, a mold opening step, and the like. Furthermore, the controller 700 performs a plasticizing step, a filling step, a pressure holding step, and the like during the mold clamping step. A series of operations for obtaining molding products, for example, operations from the start of the plasticizing step to the start of the next plasticizing step are also referred to as "shot" or "molding cycle". The time required for one shot is also referred to as "molding cycle time".

For example, one molding cycle includes the plasticizing step, the mold closing step, the mold clamping step, the filling step, the pressure holding step, the cooling step, the mold opening step, and the ejection step in this order. The order here is the order of the start of each step. The filling step, the pressure holding step, and the cooling step are performed in between the start of the mold clamping step and the end of the mold clamping step. The end of the mold clamping step coincides with the start of the mold opening step. In order to shorten the molding cycle time, a plurality of steps may be performed simultaneously. For example, the plasticizing step may be performed during the cooling step of the previous molding cycle, and in this case, the mold closing step may be performed at the beginning of the molding cycle. The filling step may be started during the mold closing step. The ejection step may be started during the mold opening step. In a case where an on-off valve that opens and closes the flow path of the nozzle 320 is provided, the mold opening step may be started during the plasticizing step. This is because even if the mold opening step is started during the plasticizing step, the molding material does not leak from the nozzle 320 if the on-off valve closes the flow path of the nozzle 320.

The controller 700 is connected to a manipulation unit 750 and a display unit 760. The manipulation unit 750 receives an input manipulation by a user and outputs a signal corresponding to the input manipulation to the controller 700. The display unit 760 displays a manipulation screen corresponding to the input manipulation in the manipulation unit 750 under the control of the controller 700.

The manipulation screen is used for setting the injection molding machine or the like. A plurality of manipulation screens are prepared and are switched or overlapped to be displayed. The user performs setting of the injection molding machine (including inputting of set values) by manipulating the manipulation unit 750 while viewing the manipulation screen displayed on the display unit 760.

For example, the manipulation unit 750 and the display unit 760 may be configured as a touch panel, and may be integrated. In addition, although the manipulation unit 750 and the display unit 760 of the present embodiment are integrated, the manipulation unit 750 and the display unit 760 may provide independently. A plurality of manipulation units 750 may be provided.

### (Structure of Injection Unit)

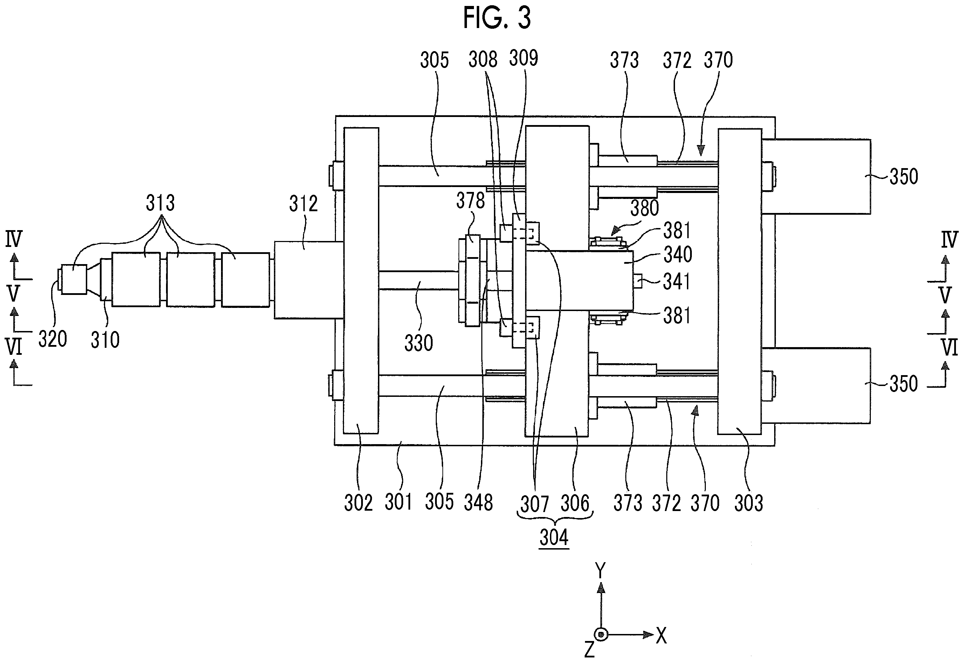

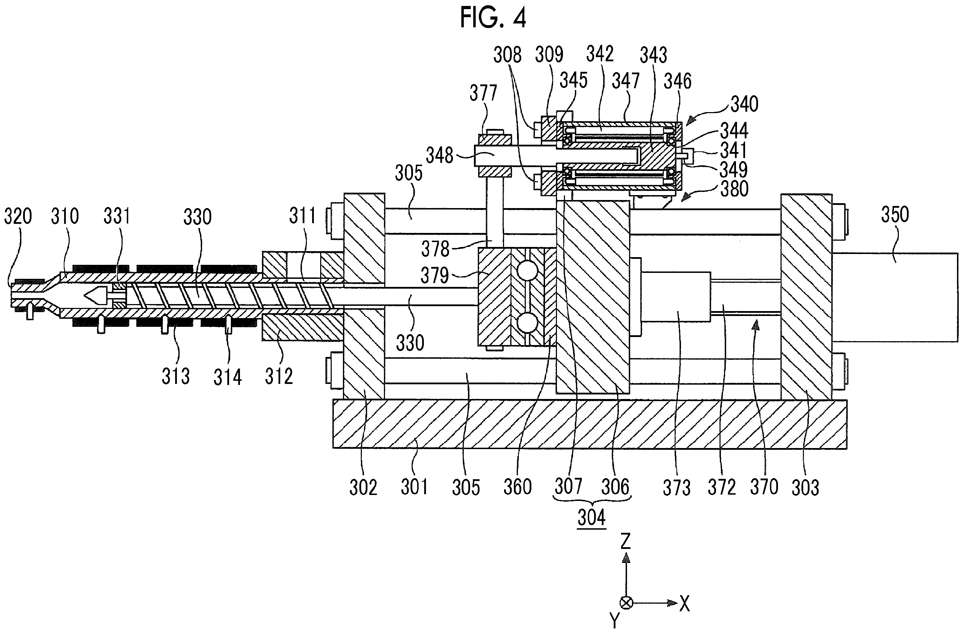

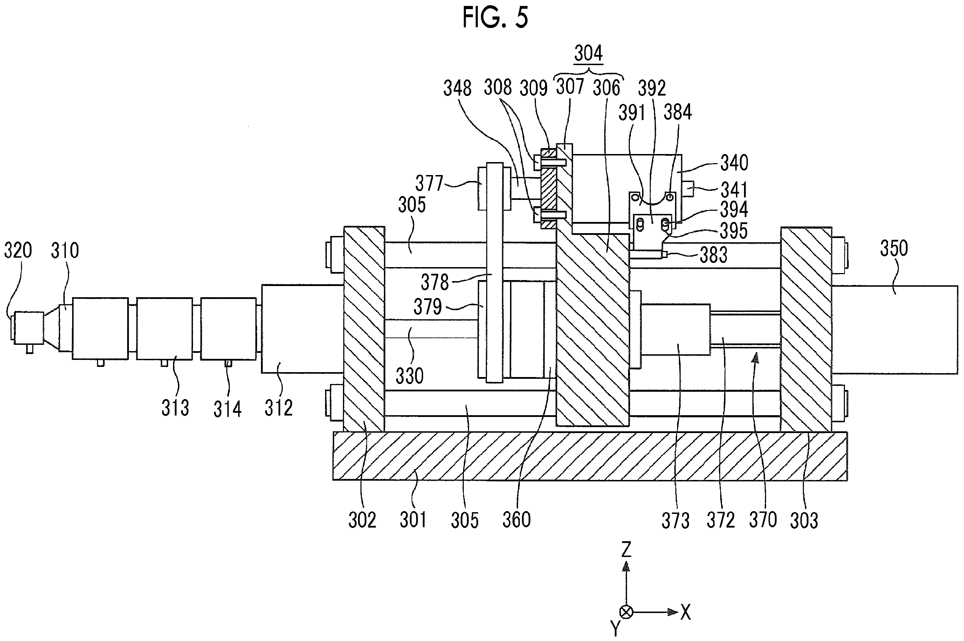

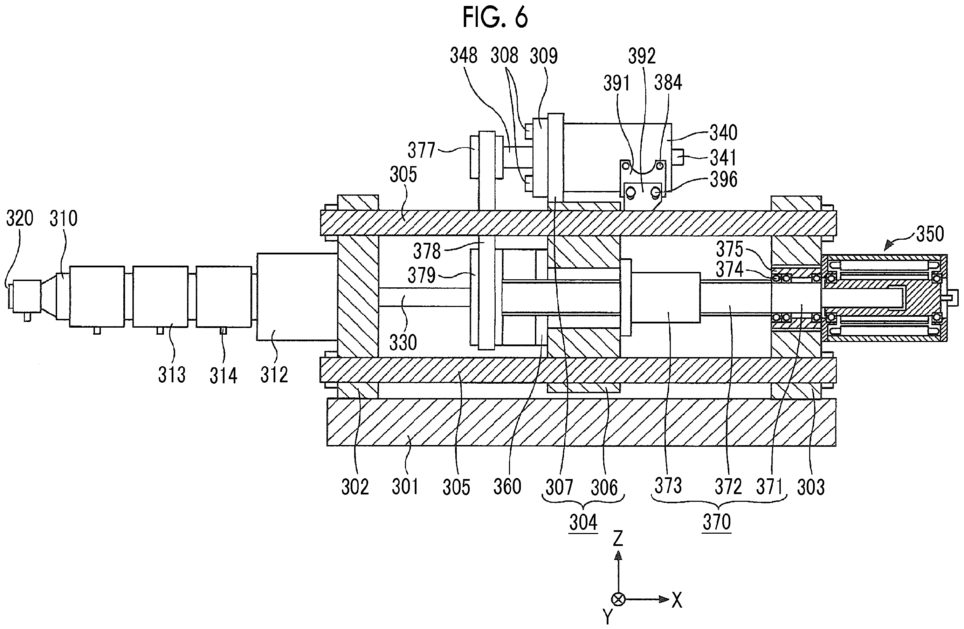

Fig. 3 is a plan view showing a structure of the injection unit according to the embodiment. Fig. 4 is a cross-sectional view of the injection unit taken along line IV-IV in Fig. 3. Fig. 5 is a cross-sectional view of the injection unit taken along line V-V in Fig. 3. In Fig. 5, illustration of a tension adjustment bolt 396 shown in Fig. 6 is omitted for convenience of description. Fig. 6 is a cross-sectional view of the injection unit taken along line VI-VI in Fig. 3. In each of the figures below, the X direction, the Y direction, and the Z axis direction are directions perpendicular to each other. The X direction is a rotation axis direction of the plasticizing motor 340. In a case where the injection unit 300 is a horizontal type injection unit, the X direction and the Y direction are the horizontal direction and the Z direction is the up-down direction.

The injection unit 300 includes a front support 302 which holds a rear end portion of the cylinder 310, and a rear support 303 which is provided behind the front support 302. The front support 302 and the rear support 303 are fixed on the slide base 301.

A movable plate 304 is provided between the front support 302 and the rear support 303 so as to be movable forward or rearward. Guides 305 of the movable plate 304 are laid between the front support 302 and the rear support 303. The guides 305 may be placed on the slide base 301.

The movable plate 304 rotatably holds the screw 330. The movable plate 304 moves forward or rearward with respect to the front support 302, and thus, the screw 330 can move forward or rearward inside the cylinder 310. For example, the injection motor 350 is used to move the screw 330 forward or rearward.

The injection motor 350 may be attached to the rear support 303. The rotary motion of the injection motor 350 is converted into a linear motion of the movable plate 304 by a motion conversion mechanism 370 and then transmitted to the screw 330.

The motion conversion mechanism 370 includes a rotation transmission shaft 371 rotated by the injection motor 350, a screw shaft 372 rotated by the rotation of the rotation transmission shaft 371, and a screw nut 373 which is screwed to the screw shaft 372 and is moved forward or rearward by the rotation of the screw shaft 372.

For example, inside a rotor of the injection motor 350, the rotation transmission shaft 371 is splined to the rotor. The rotation transmission shaft 371 has a plurality of keys on its outer peripheral portion with gaps therebetween in a circumferential direction. On the other hand, the rotor of the injection motor 350 has a plurality of key grooves on its inner peripheral portion, into which the plurality of keys are slidably inserted. The number of keys or the number of key grooves may be one.

The rotation transmission shaft 371 of the present embodiment is splined to the rotor inside the rotor of the injection motor 350, but the present invention is not limited to this. For example, the rotation transmission shaft 371 may be coupled to the rotor of the injection motor 350 by a frictional force. In this case, a wedge or the like may be driven between the rotation transmission shaft 371 and the rotor.

The rotation transmission shaft 371 may be formed integrally with the screw shaft 372, or may be formed separately from the screw shaft 372 and connected to the screw shaft 372.

As shown in Fig. 6, the rotation transmission shaft 371 and the screw shaft 372 are attached to the rear support 303 so as not to be movable forward or rearward and to be rotatable via a bearing 374 and a bearing holder 375 which holds an outer ring of the bearing 374. On the other hand, the screw nut 373 is fixed to the movable plate 304.

The motion conversion mechanism 370, the bearing 374, the bearing holder 375, and the like constitute a motion conversion mechanism assembly. The motion conversion mechanism assembly is assembled in advance and attached to the rear support 303 via the injection motor 350.

If the injection motor 350 is driven to rotate the rotation transmission shaft 371, the screw shaft 372 is rotated, and the screw nut 373 is moved forward or rearward. Accordingly, the movable plate 304 moves forward or rearward, and the screw 330 is moved forward or rearward inside the cylinder 310.

The arrangement of the injection motor 350 that rotates the screw shaft 372 and the screw nut 373 may be reversed. That is, the injection motor 350 may be attached to the front support 302 and the screw nut 373 may be fixed to the movable plate 304. In this case, if the injection motor 350 is driven to rotate the screw shaft 372, the screw nut 373 moves forward or rearward and the movable plate 304 moves forward or rearward.

As shown in Fig. 3, the injection motor 350 and the motion conversion mechanism 370 may be arranged symmetrically about a center line of the screw 330. The number of injection motors 350 and the number of motion conversion mechanisms 370 may be one, and the injection motor 350 and the motion conversion mechanism 370 may be arranged on the center line of the screw 330.

The plasticizing motor 340 is attached to the movable plate 304. A rotary motion of the plasticizing motor 340 is transmitted to the screw 330 by a drive pulley 377, a belt 378, a driven pulley 379, and the like. The drive pulley 377 is fixed to a rotating shaft 348 of the plasticizing motor 340, the driven pulley 379 is fixed to a rear end portion of the screw 330, and the belt 378 is laid between the drive pulley 377 and the driven pulley 379.

For example, the screw 330 is attached to the movable plate 304 via the driven pulley 379 and the pressure detector 360. An installation location of the pressure detector 360 may be another location, and the screw 330 may be attached to the movable plate 304 via the driven pulley 379. The plasticizing motor 340 that rotates the screw 330 is attached to the movable plate 304. The pressure detector 360 may be provided between the screw nut 373 and the movable plate 304.

### (Attachment Structure of Plasticizing Motor to Movable Plate)

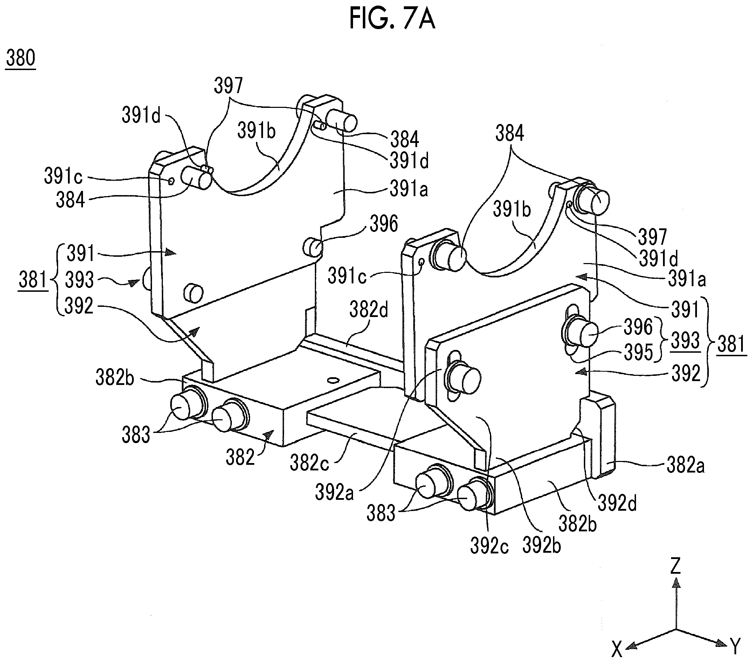

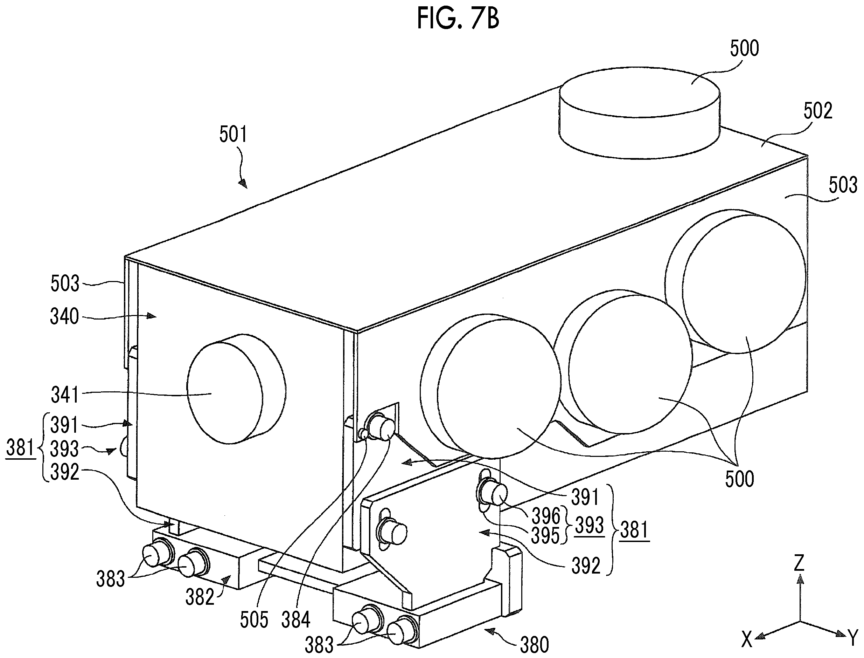

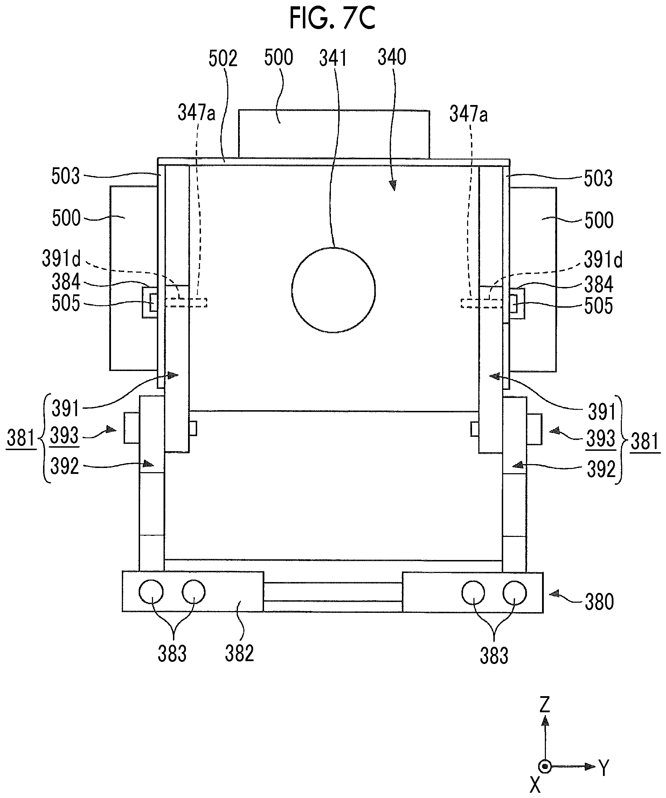

An attachment structure of the plasticizing motor 340 to the movable plate 304 will be described with reference to Figs. 7A, 7B, and 7C in addition to Figs. 3 to 6. Fig. 7A is a perspective view showing a plasticizing motor support tool which supports the plasticizing motor with respect to the movable plate according to the embodiment. Fig. 7B is a perspective view showing a state in which the plasticizing motor is supported by the plasticizing motor support tool shown in Fig. 7A. Fig. 7C is a rear view showing the state in which the plasticizing motor is supported by the plasticizing motor support tool shown in Fig. 7A.

As shown in Fig. 4, the plasticizing motor 340 includes a stator 342, a rotor 343 which is rotated relative to the stator 342, and a plasticizing motor encoder 341 which detects the rotation of the rotor 343. The plasticizing motor 340 includes motor bearings 344 which rotatably support the rotor 343 with respect to the stator 342, a front flange 345 which holds the motor bearing 344 on a front side, and a rear flange 346 which holds the motor bearing 344 on a rear side. The plasticizing motor 340 includes a motor frame 347 which connects the front flange 345 and the rear flange 346 with a gap therebetween in a front-rear direction.

The plasticizing motor 340 rotates the screw 330. The rotation axis direction of the plasticizing motor 340 is the X direction. The rotating shaft 348 of the plasticizing motor 340 and the screw 330 are arranged parallel to each other with a gap therebetween in an axis perpendicular direction (for example, the Z direction) perpendicular to the rotation axis direction of the plasticizing motor 340. A rotational driving force of the rotating shaft 348 of the plasticizing motor 340 is transmitted to the screw 330 via the belt 378 and the like.

In the present embodiment, the plasticizing motor 340 corresponds to a motor described in the claims, the screw 330 corresponds to a rotating member described in the claims, and the movable plate 304 corresponds to an attachment base described in the claims.

The movable plate 304 includes a movable plate body portion 306 which supports the motion conversion mechanism 370, the driven pulley 379, and the like, and a pair of movable plate protruding portions 307 which protrude from the movable plate body portion 306 in the Z direction. The pair of movable plate protruding portions 307 are provided with a gap therebetween in the Y direction. The rotating shaft 348 of the plasticizing motor 340 is disposed between the pair of movable plate protruding portions 307. The plasticizing motor 340 and the movable plate body portion 306 are provided with a gap therebetween in the Z direction for adjusting the tension of the belt 378.

A plasticizing motor attachment plate 309 is attached to the pair of movable plate protruding portions 307 with bolts 308 or the like. The front flange 345 of the plasticizing motor 340 is fixed to the plasticizing motor attachment plate 309. A head portion of the bolt 308 fastens the plasticizing motor attachment plate 309 to the movable plate protruding portion 307.

The plasticizing motor attachment plate 309 may be attached to the pair of movable plate protruding portions 307 so as to be displaceable in the Z direction. Accordingly, the plasticizing motor 340 can be displaced in the Z direction with respect to the movable plate 304, and thus, the tension of the belt 378 can be adjusted.

The bolt 308 penetrates a long hole formed in the plasticizing motor attachment plate 309 and is screwed into a bolt hole formed in each of the movable plate protruding portions 307. The long hole of the plasticizing motor attachment plate 309 is formed longer in the Z direction than the bolt hole of the movable plate protruding portion 307.

By loosening the bolt 308, the plasticizing motor attachment plate 309 can be displaced in the Z direction with respect to the movable plate protruding portion 307, and the tension of the belt 378 can be adjusted. After adjusting the tension of the belt 378, by fastening the bolt 308, the plasticizing motor attachment plate 309 is interposed and fixed between the head portion of the bolt 308 and the movable plate protruding portion 307.

The arrangement of the long hole and the bolt hole may be reversed. The bolt hole may be formed in the plasticizing motor attachment plate 309, and the long hole may be formed in each of the movable plate protruding portions 307. In this case, the head portion of the bolt 308 and the plasticizing motor attachment plate 309 are fixed to each other with the movable plate protruding portion 307 interposed therebetween.

In order to adjust the tension of the belt 378, a plurality of round holes may be arranged with gaps therebetween in the Z direction instead of the long hole in a region where the long hole is formed. The bolt 308 is inserted through one of the plurality of round holes arranged with gaps therebetween in the Z direction, and screwed into the bolt hole. The tension of the belt 378 can be adjusted by changing the round hole through which the bolt 308 is inserted. Alternatively, an actuator that moves the movable plate protruding portion 307 and the plasticizing motor attachment plate 309 relative to each other may be provided to adjust the tension of the belt 378.

As shown in Fig. 7C, the plasticizing motor support tool 380 includes a pair of clamping portions 381 which clamp the plasticizing motor 340 from both sides in the axis perpendicular direction (for example, Y direction) perpendicular to the rotation axis direction (for example, X direction) of the plasticizing motor 340. For example, the pair of clamping portions 381 are provided with a gap therebetween in the Y direction, and clamp the plasticizing motor 340 from both sides in the Y direction.

The plasticizing motor support tool 380 includes a connection portion 382 which connects the pair of clamping portions 381 to each other with a gap therebetween. The pair of clamping portions 381 and the connection portion 382 constitute a substantially U-shaped assembly as viewed in the X direction. The connection portion 382 is attached to the movable plate 304 (more specifically, the movable plate body portion 306). As shown in Fig. 7A, the connection portion 382 includes a rectangular parallelepiped vertical plate portion 382a on which the movable plate body portion 306 abuts, a pair of rectangular parallelepiped horizontal plate portions 382b provided with a gap therebetween in the Y direction on a surface opposite to a surface of the vertical plate portion 382a on which the movable plate body portion 306 abuts, and a rectangular parallelepiped intermediate plate portion 382c which connects the pair of horizontal plate portions 382b. The vertical plate portion 382a, the pair of horizontal plate portions 382b, and the intermediate plate portion 382c may be formed individually and fixed by welding, or may be formed by machining.

The connection portion 382 has a rectangular parallelepiped cutout 382d formed on an upper surface of the vertical plate portion 382a. The pair of horizontal plate portion 382b and the intermediate plate portion 382c are provided on a surface opposite to the side of the vertical plate portion 382a on which the movable plate body portion 306 abuts below the cutout 382d. A Z-direction dimension (plate thickness) of the intermediate plate portion 382c is smaller than A Z-direction dimension (plate thickness) of the horizontal plate portion 382b. Moreover, an X-direction dimension of the intermediate plate portion 382c is smaller than an X-direction dimension of the horizontal plate portion 382b.

The plasticizing motor support tool 380 suppresses the vibration of the plasticizing motor 340 by pressing the plasticizing motor 340 that is separated from the movable plate body portion 306 in the Z direction from both sides in the Y direction.

By suppressing the vibration of the plasticizing motor 340, damage to the plasticizing motor encoder 341 can be suppressed. As shown in Fig. 4, the plasticizing motor encoder 341 detects the rotation of a rotation detection shaft 349 which rotates together with the rotor 343. The rotation detection shaft 349 protrudes from the rear flange 346, the plasticizing motor encoder 341 is fixed to the rear flange 346, and a tip end portion of the rotation detection shaft 349 is disposed inside the plasticizing motor encoder 341. By suppressing the vibration of the plasticizing motor 340, an axial deviation between the rotation detection shaft 349 and the plasticizing motor encoder 341 can be suppressed, and damage to the plasticizing motor encoder 341 can be suppressed.

Furthermore, by suppressing the vibration of the plasticizing motor 340, damage to air cooling fans 500 (see Figs. 7B and 7C) attached to the plasticizing motor 340 can be suppressed. The air cooling fans 500 are attached to the plasticizing motor 340 via a fan attachment cover 501 and cool the plasticizing motor 340.

The effect of suppressing the vibration of the plasticizing motor 340 is significantly obtained particularly in molding that requires high torque and high cycle molding. Furthermore, by supporting the plasticizing motor 340 with the plasticizing motor support tool 380, an inclination of the plasticizing motor 340 can be suppressed, and uneven wear of the belt 378 can be suppressed.

Each of the clamping portions 381 includes a first support portion 391 fixed to the plasticizing motor 340, a second support portion 392 fixed to the movable plate 304, and a link portion 393 which links the first support portion 391 to the second support portion 392 such that Z-direction positions of the first support portion 391 and the second support portion 392 can be adjusted. The second support portion 392 is fixed to the movable plate 304 via the connection portion 382.

For example, as shown in Fig. 7C, the first support portion 391 is constituted by a plate perpendicular to the Y direction and is fixed to the motor frame 347 of the plasticizing motor 340 with a motor frame bolt 384 or the like. A fastening torque of the motor frame bolt 384 is managed such that the motor frame 347 is not deformed. The fastening torque of the motor frame bolt 384 is managed by a skilled worker.

As shown in Fig. 7A, the first support portion 391 includes a rectangular parallelepiped vertical plate portion 391a on which a lateral side surface of the plasticizing motor 340 abuts. The vertical plate portion 391a is disposed perpendicular to the vertical plate portion 382a of the connection portion 382 and the horizontal plate portion 382b of the connection portion 382. The first support portion 391 has a semi-cylindrical cutout 391b formed at a center portion of an upper surface of the vertical plate portion 391a. The cutout 391b forms a ventilation path through which the wind sent from the air cooling fans 500 (see Figs. 7B and 7C) to the lateral side surface of the plasticizing motor 340 passes. A radius of the cutout 391b may be larger than a radius of the air cooling fan 500. The air cooling fan 500 is attached to the plasticizing motor 340 via the fan attachment cover 501.

As shown in Fig. 7C, the fan attachment cover 501 includes a ceiling portion 502 that is fixed to an upper surface of the plasticizing motor 340 and side wall portions 503 which faces the lateral side surfaces of the plasticizing motor 340. A pair of the side wall portions 503 are provided with a gap therebetween in the Y direction, and are respectively fixed to the vertical plate portions 391a with cover attachment bolts 505, respectively. One air cooling fan 500 is attached to the ceiling portion 502, and three air cooling fans 500 are attached to each of the pair of side wall portions 503. The number of air cooling fans 500 is not particularly limited.

As shown in Fig. 7A, a bolt hole 391c into which the cover attachment bolt 505 (see Figs. 7B and 7C) is screwed is formed in an upper end portion of the vertical plate portion 391a. The bolt hole 391c is formed at an end portion of the vertical plate portion 391a on a side opposite to the movable plate body portion 306 (X-direction positive side).

A through-hole through which the motor frame bolt 384 is inserted is formed in the upper end portion of the vertical plate portion 391a. A pair of the through-holes are formed with a gap therebetween in the rotation axis direction (X direction) of the plasticizing motor 340, and the pair of through-holes are formed with the cutout 391b interposed therebetween. The motor frame bolt 384 is inserted into the through-hole of the vertical plate portion 391a and screwed into a bolt hole of the motor frame 347.

A pin hole 391d into which a pin as a positioning portion 397, which will be described later, is press-fitted is formed at the upper end portion of the vertical plate portion 391a. The pin hole 391d is formed between the through-hole through which the motor frame bolt 384 of the vertical plate portion 391a is inserted and the cutout 391b.

A bolt hole 394 (see Fig. 5) into which the tension adjustment bolt 396, which will be described later, is screwed is formed at a lower end portion of the vertical plate portion 391a. A pair of the bolt holes 394 are formed with a gap therebetween in the rotation axis direction (X direction) of the plasticizing motor 340.

For example, the second support portion 392 is constituted by a plate perpendicular to the Y direction, and is fixed to the connection portion 382 by welding or the like. Bolts may be used instead of welding. In Fig. 7C, the second support portion 392 is disposed on the side opposite to the plasticizing motor 340 with respect to the first support portion 391, but may also be disposed on the same side as the plasticizing motor 340 with respect to the first support portion 391.

As shown in Fig. 7A, the second support portion 392 includes a rectangular parallelepiped upper plate portion 392a on which the first support portion 391 (more specifically, the vertical plate portion 391a) abuts, a rectangular parallelepiped lower plate portion 392b parallel to the upper plate portion 392a, and a right trapezoidal columnar intermediate plate portion 392c which connects the upper plate portion 392a to the lower plate portion 392b.

The intermediate plate portion 392c has an upper surface in contact with the upper plate portion 392a and a lower surface in contact with the lower plate portion 392b. The lower surface of the intermediate plate portion 392c is parallel to the upper surface of the intermediate plate portion 392c and is shorter than the upper surface of the intermediate plate portion 392c in the X direction. The intermediate plate portion 392c and the upper plate portion 392a may be integrally formed. In addition, the intermediate plate portion 392c and the lower plate portion 392b may be integrally formed.

The second support portion 392 has a rectangular parallelepiped cutout 392d formed over the lower plate portion 392b and the intermediate plate portion 392c. An inverted L-shaped wall surface of the cutout 392d abuts on the vertical plate portion 382a of the connection portion 382.

A pair of long holes 395 are formed in the upper plate portion 392a with a gap therebetween in the rotation axis direction (X direction) of the plasticizing motor 340. A longitudinal direction of the long hole 395 is the axis perpendicular direction (for example, Z direction) perpendicular to the rotation axis direction of the plasticizing motor 340.

The link portion 393 links the first support portion 391 to the second support portion 392 such that the Z-direction positions of the first support portion 391 and the second support portion 392 can be adjusted. For example, the link portion 393 includes the bolt holes 394 (see Fig. 5) formed in the first support portion 391, the long holes 395 (see Fig. 5) formed in the second support portion 392, and the tension adjustment bolts 396 (see Fig. 6) which penetrate the long holes 395 and are screwed into the bolt holes 394. The long hole 395 is a hole longer than the bolt hole 394 in the Z direction.

By loosening the tension adjustment bolt 396, the Z-direction positions of the first support portion 391 and the second support portion 392 can be adjusted, and the tension of the belt 378 can be adjusted. After adjusting the tension of the belt 378, by fastening the tension adjustment bolt 396, the first support portion 391 and the second support portion 392 are fixed.

In addition, although the link portion 393 of the present embodiment is constituted by the bolt holes 394, the long holes 395, and the tension adjustment bolts 396, the present invention is not limited to this. For example, a plurality of round holes may be arranged with gaps therebetween in the Z direction instead of the long hole 395 in a region where the long hole 395 is formed. The tension adjustment bolt 396 is inserted through one of the plurality of round holes arranged with gaps therebetween in the Z direction, and screwed into the bolt hole 394. The tension of the belt 378 can be adjusted by changing the round hole through which the tension adjustment bolt 396 is inserted.

Alternatively, the link portion 393 may include an actuator that moves the first support portion 391 and the second support portion 392 relative to each other.

Since the first support portion 391 and the second support portion 392 are linked by the link portion 393 such that the Z-direction positions thereof can be adjusted, a work of loosening or fastening the motor frame bolt 384 when the tension of the belt 378 is adjusted becomes unnecessary. Therefore, the tension of the belt 378 can be adjusted regardless of the skill level of the worker. Since it is possible to reduce the work of loosening and fastening the bolt for which a fastening torque has to be managed, it is possible to prevent the motor frame 347 from being deformed by mistake.

The arrangement of the bolt hole 394 and the long hole 395 may be reversed. Specifically, the bolt hole 394 may be formed in the second support portion 392, and the long hole 395 may be formed in the first support portion 391. In this case, a head portion of the tension adjustment bolt 396 and the second support portion 392 are fixed to each other with the first support portion 391 interposed therebetween.

The first support portion 391 includes the positioning portion 397 (see Fig. 7A) which positions the plasticizing motor 340 and the first support portion 391 in the X direction by being fitted with the plasticizing motor 340. For example, the positioning portion 397 is constituted by a pin fitted in a pin hole 347a (see Fig. 7C) formed in the motor frame 347 of the plasticizing motor 340.

As will be described later in detail, the pin hole 347a of the plasticizing motor 340 is formed by fastening the plasticizing motor 340 and the first support portion 391 with the motor frame bolt 384 and thereafter inserting a drill into the pin hole 391d formed in advance in the first support portion 391. Accordingly, the pin hole 391d of the first support portion 391 and the pin hole 347a of the plasticizing motor 340 can be formed continuously. Thereafter, the pin as the positioning portion 397 is press-fitted into the pin hole 391d of the first support portion 391 and the pin hole 347a of the plasticizing motor 340. The pin as the positioning portion 397 restricts a X-direction positional deviation between the plasticizing motor 340 and the first support portion 391 when the motor frame bolt 384 is loosened by mistake, thereby restricting a X-direction positional deviation between the first support portion 391 and the second support portion 392. Accordingly, the X-direction positional deviation between the bolt hole 394 of the first support portion 391 and the long hole 395 of the second support portion 392 can be restricted.

Here, a method of attaching the plasticizing motor support tool 380 will be described.

First, the connection portion 382 and the movable plate body portion 306 are temporarily fixed with a bolt as a fastening portion 383, and the first support portion 391 and the plasticizing motor 340 are temporarily fixed with the motor frame bolt 384. The second support portion 392 and the first support portion 391 are temporarily fixed by the tension adjustment bolt 396. The second support portion 392 and the connection portion 382 are integrated in advance. The temporary fixing is performed by loosely screwing various bolts into the respective bolt holes.

Next, the connection portion 382 and the movable plate body portion 306 are permanently fixed with the bolt as the fastening portion 383, and the first support portion 391 and the plasticizing motor 340 are permanently fixed with the motor frame bolt 384. The second support portion 392 and the first support portion 391 are permanently fixed by the tension adjustment bolt 396. The permanent fixing is performed by further fastening the bolt that is loosely screwed into the bolt hole.

Next, the pin hole 347a is formed on the lateral side surface of the plasticizing motor 340 by the drill inserted into the pin hole 391d of the first support portion 391. Accordingly, the pin hole 391d of the first support portion 391 and the pin hole 347a of the plasticizing motor 340 can be formed continuously. Thereafter, the pin as the positioning portion 397 is press-fitted into the pin hole 391d of the first support portion 391 and the pin hole 347a of the plasticizing motor 340. In this manner, the plasticizing motor support tool 380 is attached.

The positioning portion 397 may be constituted by a pin hole that is fitted to a pin formed on the motor frame 347 of the plasticizing motor 340.

The plasticizing motor support tool 380 has the fastening portion 383 which fastens the connection portion 382 to the movable plate 304 in the rotation axis direction (X direction) of the plasticizing motor 340. The connection portion 382 may be fastened to a surface of the movable plate 304 perpendicular to the X direction. For example, the fastening portion 383 is constituted by a bolt or the like, and fastens the connection portion 382 to the movable plate body portion 306. The bolt as the fastening portion 383 is disposed parallel to the rotation axis direction (X direction) of the plasticizing motor 340, and is inserted into a through-hole of the horizontal plate portion 382b and a through-hole of the vertical plate portion 382a and screwed into a bolt hole of the movable plate body portion 306. Vibration of the plasticizing motor 340 in the rotation axis direction (X direction) can be suppressed.

As shown in Fig. 5, the plasticizing motor support tool 380 is attached to the movable plate 304 by the bolt constituting the fastening portion 383 and the bolt 308. The bolt constituting the fastening portion 383 and the bolt 308 are disposed with the movable plate 304 interposed therebetween in the X direction, and are disposed so as to face each other. Therefore, an attaching property of the plasticizing motor support tool 380 is good and maintainability is good.

As shown in Fig. 5, the rotating shaft 348 of the plasticizing motor 340 may be directed forward, and the drive pulley 377, the belt 378, the driven pulley 379, and the like may be disposed in front of the movable plate 304. In this case, the screw 330 is connected to the driven pulley 379 in front of the movable plate 304 without penetrating the movable plate 304. Since the screw 330 does not penetrate the movable plate 304, in a case where a length of the screw 330 is the same, a space in front of the movable plate 304 is large, and maintainability of the screw 330 is good.

The rotating shaft 348 of the plasticizing motor 340 may be directed rearward, and the drive pulley 377, the belt 378, the driven pulley 379, and the like may be disposed behind the movable plate 304. In this case, the screw 330 penetrates the movable plate 304 and is connected to the driven pulley 379 behind the movable plate 304. In this case, the rear end portion of the screw 330, the driven pulley 379, the belt 378, the drive pulley 377, and the like can be accommodated in a cover provided behind the movable plate 304, and noises therefrom can be reduced.

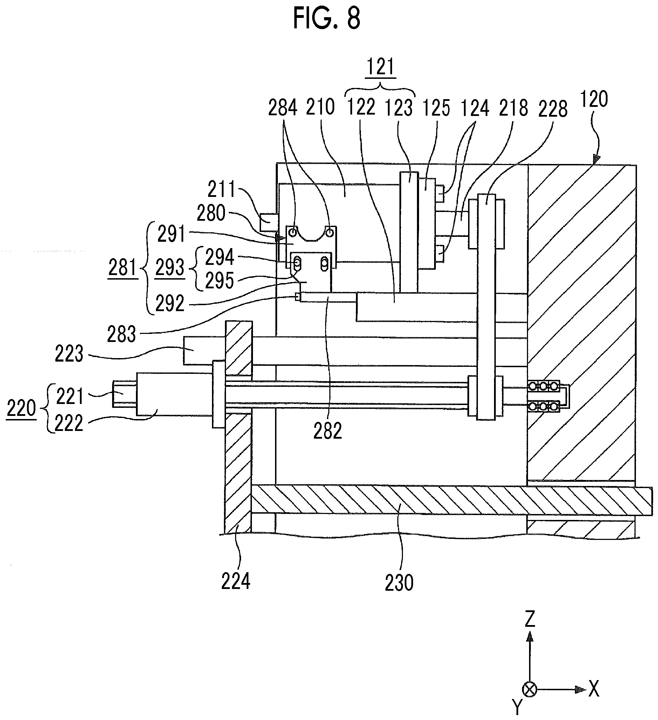

(Attachment Structure of Ejector motor to movable platen) Fig. 8 is a cross-sectional view showing an attachment structure of the ejector motor to the movable platen according to another embodiment. Similarly to the plasticizing motor 340, the ejector motor 210 includes a stator, a rotor which is rotated relative to the stator, and the ejector motor encoder 211 which detects the rotation of the rotor.

The ejector motor 210 is attached to an attachment plate 121 which is a portion of the movable platen 120. The rotation axis direction of the ejector motor 210 is the X direction. A rotating shaft 218 of the ejector motor 210 and a screw shaft 221 are arranged parallel to each other with a gap therebetween in the axis perpendicular direction (for example, the Z direction) perpendicular to the rotation axis direction of the ejector motor 210. A rotational driving force of the ejector motor 210 is transmitted to the screw shaft 221 via a belt 228 or the like.

The screw shaft 221 and a screw nut 222 which is screwed to the screw shaft 221 constitute a motion conversion mechanism 220. The screw nut 222 is fixed to a slide base 224 which slides along an X axis guide 223 fixed to the movable platen 120. A rear end portion of the ejector rod 230 is fixed to the slide base 224.

If the ejector motor 210 is driven to rotate the screw shaft 221, the screw nut 222, the slide base 224, and the ejector rod 230 are moved forward or rearward. The arrangement of the screw shaft 221 and the screw nut 222 is not particularly limited. For example, the ejector motor 210 may advance and retract the screw shaft 221 by rotating the screw nut 222.

In the present embodiment, the ejector motor 210 corresponds to the motor described in the claims, the screw shaft 221 corresponds to the rotating member described in the claims, and the attachment plate 121 corresponds to the attachment base described in the claims.

In the present embodiment, the ejector motor 210 and the screw shaft 221 are provided with a gap therebetween in the Z direction, but may be provided with a gap therebetween in the Y direction. The ejector motor 210 and the screw shaft 221 may be provided with a gap therebetween in the axis perpendicular direction perpendicular to the rotation axis direction (X direction) of the ejector motor 210.

The attachment plate 121 includes an attachment plate body portion 122 and a pair of attachment plate protruding portions 123 which protrude from the attachment plate body portion 122 in the Z direction. The pair of attachment plate protruding portions 123 are provided with a gap therebetween in the Y direction. The rotating shaft 218 of the ejector motor 210 is disposed between the pair of attachment plate protruding portions 123. The ejector motor 210 and the attachment plate body portion 122 are provided with a gap therebetween in the Z direction for adjusting the tension of the belt 228.

An ejector motor attachment plate 125 is attached the pair of attachment plate protruding portions 123 with bolts 124 or the like. A front flange of the ejector motor 210 is fixed to the ejector motor attachment plate 125. A head portion of the bolt 124 fastens the ejector motor attachment plate 125 to the attachment plate protruding portion 123.

The ejector motor attachment plate 125 may be attached to the pair of attachment plate protruding portions 123 so as to be displaceable in the Z direction. Accordingly, the ejector motor 210 can be displaced in the Z direction with respect to the attachment plate 121, and thus, the tension of the belt 228 can be adjusted.

The bolt 124 penetrates a long hole formed in the ejector motor attachment plate 125 and is screwed into a bolt hole formed in each of the attachment plate protruding portions 123. The long hole of the ejector motor attachment plate 125 is formed longer in the Z direction than the bolt hole of the attachment plate protruding portion 123.

By loosening the bolt 124, the ejector motor attachment plate 125 can be displaced in the Z direction with respect to the attachment plate protruding portion 123, and the tension of the belt 228 can be adjusted. After adjusting the tension of the belt 228, by fastening the bolt 124, the ejector motor attachment plate 125 is interposed and fixed between the head portion of the bolt 124 and the attachment plate protruding portion 123.

The arrangement of the long hole and the bolt hole may be reversed. The bolt hole may be formed in the ejector motor attachment plate 125, and the long hole may be formed in each of the attachment plate protruding portions 123. In this case, the head portion of the bolt 124 and the ejector motor attachment plate 125 are fixed to each other with the attachment plate protruding portion 123 interposed therebetween.

In order to adjust the tension of the belt 228, a plurality of round holes may be arranged with gaps therebetween in the Z direction instead of the long hole in a region where the long hole is formed. The bolt 124 is inserted through one of the plurality of round holes arranged with gaps therebetween in the Z direction, and screwed into the bolt hole. The tension of the belt 228 can be adjusted by changing the round hole through which the bolt 124 is inserted. In addition, an actuator that moves the attachment plate protruding portion 123 and the ejector motor attachment plate 125 relative to each other may be provided to adjust the tension of the belt 228.

The ejector motor support tool 280 includes a pair of clamping portions 281 which clamp the ejector motor 210 from both sides in the axis perpendicular direction (for example, Y direction) perpendicular to the rotation axis direction (for example, X direction) of the ejector motor 210. For example, the pair of clamping portions 281 are provided with a gap therebetween in the Y direction, and clamp the ejector motor 210 from both sides in the Y direction. The pair of clamping portions 281 of the ejector motor support tool 280 are formed in the same manner as the pair of clamping portions 381 of the plasticizing motor support tool 380.

The ejector motor support tool 280 includes a connection portion 282 which connects the pair of clamping portions 281 to each other with a gap therebetween. The pair of clamping portions 281 and the connection portion 282 constitute a substantially U-shaped assembly as viewed in the X direction. The connection portion 282 is attached to the attachment plate 121 (more specifically, the attachment plate body portion 122). The connection portion 282 of the ejector motor support tool 280 is formed in the same manner as the connection portion 382 of the plasticizing motor support tool 380.

The ejector motor support tool 280 suppresses vibration of the ejector motor 210 by pressing the ejector motor 210 that is separated from the attachment plate body portion 122 in the Z direction from both sides in the Y direction.

By suppressing the vibration of the ejector motor 210, damage to the ejector motor encoder 211 can be suppressed. The ejector motor encoder 211 detects rotation of a rotation detection shaft which rotates together with the rotor. The rotation detection shaft protrudes from a rear flange of the ejector motor 210, the ejector motor encoder 211 is fixed to the rear flange of the ejector motor 210, and a tip end portion of the rotation detection shaft is disposed inside the ejector motor encoder 211. By suppressing the vibration of the ejector motor 210, an axial deviation between the rotation detection shaft and the ejector motor encoder 211 can be suppressed, and damage to the ejector motor encoder 211 can be suppressed.

Furthermore, by suppressing the vibration of the ejector motor 210, damage to air cooling fans attached to the ejector motor 210 can be suppressed. The air cooling fans are attached to the ejector motor 210 via a fan attachment cover, and cool the ejector motor 210.

The effect of suppressing the vibration of the ejector motor 210 is significantly obtained particularly in molding that requires high torque and high cycle molding. Furthermore, by supporting the ejector motor 210 with the ejector motor support tool 280, an inclination of the ejector motor 210 can be suppressed, and uneven wear of the belt 228 can be suppressed.

Each of the clamping portions 281 includes a first support portion 291 fixed to the ejector motor 210, a second support portion 292 fixed to the attachment plate 121, and a link portion 293 which links the first support portion 291 to the second support portion 292 such that Z-direction positions of the first support portion 291 and the second support portion 292 can be adjusted. The second support portion 292 is fixed to the attachment plate 121 via the connection portion 282.

The first support portion 291, the second support portion 292, and the link portion 293 of the ejector motor support tool 280 are formed in the same manner as the first support portion 391, the second support portion 392, and the link portion 393 of the plasticizing motor support tool 380.

For example, the first support portion 291 is constituted by a plate perpendicular to the Y direction and is fixed to a motor frame of the ejector motor 210 with a motor frame bolt 284 or the like. A fastening torque of the motor frame bolt 284 is managed such that the motor frame is not deformed. The fastening torque of the motor frame bolt 284 is managed by a skilled worker.

For example, the second support portion 292 is constituted by a plate perpendicular to the Y direction, and is fixed to the connection portion 282 by welding or the like. Bolts may be used instead of welding. The second support portion 292 is disposed on the side opposite to the ejector motor 210 with respect to the first support portion 291, but may also be disposed on the same side as the ejector motor 210 with respect to the first support portion 291.

The link portion 293 links the first support portion 291 to the second support portion 292 such that the Z-direction positions of the first support portion 291 and the second support portion 292 can be adjusted. For example, the link portion 293 includes bolt holes 294 formed in the first support portion 291, long holes 295 formed in the second support portion 292, and tension adjustment bolts (not shown) which penetrate the long holes 295 and are screwed into the bolt holes 294. The long hole 295 is a hole longer than the bolt hole 294 in the Z direction.

By loosening the tension adjustment bolt, the Z-direction positions of the first support portion 291 and the second support portion 292 can be adjusted, and the tension of the belt 228 can be adjusted. After adjusting the tension of the belt 228, by fastening the tension adjustment bolt, the first support portion 291 and the second support portion 292 are fixed.

In addition, although the link portion 293 of the present embodiment is constituted by the bolt holes 294, the long holes 295, and the tension adjustment bolts, the present invention is not limited to this. For example, a plurality of round holes may be arranged with gaps therebetween in the Z direction instead of the long hole 295 in a region where the long hole 295 is formed. The tension adjustment bolt is inserted through one of the plurality of round holes arranged with gaps therebetween in the Z direction, and screwed into the bolt hole 294. The tension of the belt 228 can be adjusted by changing the round hole through which the tension adjustment bolt is inserted. Alternatively, the link portion 293 may include an actuator that moves the first support portion 291 and the second support portion 292 relative to each other.

Since the first support portion 291 and the second support portion 292 are linked by the link portion 293 such that the Z-direction positions thereof can be adjusted, a work of loosening or fastening the motor frame bolt 284 when the tension of the belt 228 is adjusted becomes unnecessary. Therefore, the tension of the belt 228 can be adjusted regardless of the skill level of the worker. Since it is possible to reduce the work of loosening and fastening the bolts for which a fastening torque has to be managed, it is possible to prevent the motor frame from being deformed by mistake.

The arrangement of the bolt hole 294 and the long hole 295 may be reversed. Specifically, the bolt hole 294 may be formed in the second support portion 292, and the long hole 295 may be formed in the first support portion 291. In this case, a head portion of the tension adjustment bolt and the second support portion 292 are fixed to each other with the first support portion 291 interposed therebetween.

The first support portion 291 may include a positioning portion which positions the ejector motor 210 and the first support portion 291 in the X direction by being fitted with the ejector motor 210. For example, the positioning portion is constituted by a pin fitted in a pin hole formed in the motor frame of the ejector motor 210. The pin as the positioning portion restricts a X-direction positional deviation between the ejector motor 210 and the first support portion 291 when the motor frame bolt 284 is loosened by mistake, thereby restricting a X-direction positional deviation between the first support portion 291 and the second support portion 292. Accordingly, the X-direction positional deviation between the bolt hole 294 of the first support portion 291 and the long hole 295 of the second support portion 292 can be restricted. The positioning portion may be constituted by a pin hole that is fitted to a pin formed on the motor frame of the ejector motor 210.

The ejector motor support tool 280 has a fastening portion 283 which fastens the connection portion 282 to the attachment plate 121 in the rotation axis direction (X direction) of the ejector motor 210. The connection portion 282 may be fastened to a surface of the attachment plate 121 perpendicular to the X direction. For example, the fastening portion 283 is constituted by a bolt or the like, and fastens the connection portion 282 to the attachment plate body portion 122. The bolt as the fastening portion 283 is disposed parallel to the rotation axis direction (X direction) of the ejector motor 210, and is inserted into a through-hole of the connection portion 282 and screwed into a bolt hole of the attachment plate body portion 122. Vibration of the ejector motor 210 in the rotation axis direction (X direction) can be suppressed.

As shown in Fig. 8, the ejector motor support tool 280 is attached to the attachment plate 121 by the bolt constituting the fastening portion 283 and the bolt 124. The bolt constituting the fastening portion 283 and the bolt 124 are disposed so as to face each other. Therefore, an attaching property of the ejector motor support tool 280 is good and maintainability is good.

The rotating shaft 218 of the ejector motor 210 may be directed forward as shown in Fig. 8, but may also be directed rearward.

### (Modifications and Improvements)

Although the case where the present invention is applied to the plasticizing motor 340 and the ejector motor 210 has been described in the above embodiments, the present invention may also be applied to the mold clamping motor 160, the injection motor 350, and the like.

### Reference Signs List

- 121: attachment plate (attachment base)
- 200: ejector unit
- 210: ejector motor
- 211: ejector motor encoder
- 218: rotating shaft
- 220: motion conversion mechanism
- 221: screw shaft (rotating member)
- 280: ejector motor support tool
- 281: clamping portion
- 282: connection portion
- 283: fastening portion
- 291: first support portion
- 292: second support portion
- 293: link portion
- 294: bolt hole
- 295: long hole
- 300: injection unit
- 304: movable plate (attachment base)
- 306: movable plate body portion
- 307: movable plate protruding portion
- 308: bolt
- 309: plasticizing motor attachment plate
- 330: screw (rotating member)
- 340: plasticizing motor
- 341: plasticizing motor encoder
- 342: stator
- 343: rotor
- 348: rotating shaft
- 377: drive pulley
- 378: belt
- 379: driven pulley
- 380: plasticizing motor support tool
- 381: clamping portion
- 382: connection portion
- 383: fastening portion
- 391: first support portion
- 392: second support portion
- 393: link portion
- 394: bolt hole
- 395: long hole
- 396: tension adjustment bolt
- 397: positioning portion

## Claims

1. An injection molding machine comprising:
a motor (210, 340) including a stator (342), a rotor (343) which is rotated relative to the stator (342), and an encoder (211, 341) that detects rotation of the rotor (343);
a rotating member (221, 330) disposed parallel to a rotating shaft (218, 348) of the motor (210, 340) with a gap from the motor (210, 340) in an axis perpendicular direction perpendicular to a rotation axis direction of the motor (210, 340);
a belt (228, 378) which transmits a rotational driving force of the rotating shaft (218, 348) of the motor (210, 340) to the rotating member (221, 330);
an attachment base (121, 304) to which the motor (210, 340) is attached,
**characterized in** a motor support tool (280, 380) which supports the motor with respect to the attachment base,
wherein the motor (210, 340) support tool includes a pair of clamping portions (281, 381) which clamp the motor (210, 340) from both sides in a direction perpendicular to the rotation axis direction of the motor (210, 340).

2. The injection molding machine according to claim 1,
wherein the motor support tool includes a connection portion which connects the pair of clamping portions to each other with a gap therebetween, and
the connection portion is attached to the attachment base.

3. The injection molding machine according to claim 2, wherein the motor support tool includes a fastening portion which fastens the connection portion to the attachment base in the rotation axis direction.

4. The injection molding machine according to any one of claims 1 to 3,
wherein each of the clamping portions includes a first support portion which is fixed to the motor, a second support portion which is fixed to the attachment base, and a link portion which links the first support portion to the second support portion such that positions of the first support portion and the second support portion in the axis perpendicular direction in which the rotating shaft of the motor and the rotating member are disposed with a gap therebetween can be adjusted.

5. The injection molding machine according to claim 4, wherein the first support portion includes a positioning portion which positions the motor and the first support portion in the rotation axis direction by being fitted with the motor.

6. The injection molding machine according to any one of claims 1 to 5,
wherein the attachment base includes a body portion and a pair of protruding portions which protrude from the body portion in the axis perpendicular direction in which the rotating shaft of the motor and the rotating member are disposed with a gap therebetween, and
the motor is attached to the pair of protruding portions via a motor attachment plate, and the rotating shaft of the motor is disposed between the pair of protruding portions.

## Patentansprüche

1. Spritzgießmaschine, umfassend:
einen Motor (210, 340) umfassend einen Stator (342), einen Rotor (343), der relativ zu dem Stator (342) gedreht wird, und einen Encoder (211, 341), der Drehung des Rotors (343) detektiert;
ein Drehelement (221, 330), das parallel zu einer Drehwelle (218, 348) des Motors (210, 340) mit einem Abstand von dem Motor (210, 340) in einer senkrechten Achsrichtung senkrecht zu einer Drehachsenrichtung des Motors (210, 340) angeordnet ist;
einen Riemen (228, 378), der eine Drehantriebskraft der Drehwelle (218, 348) des Motors (210, 340) an das Drehelement (221, 330) überträgt;
eine Befestigungsbasis (121, 304), an der der Motor (210, 340) angebracht ist, **gekennzeichnet durch**
ein Motorstützwerkzeug (280, 380), das den Motor in Bezug auf die Befestigungsbasis stützt,
wobei das Stützwerkzeug des Motors (210, 340) ein Paar Spannabschnitte (281, 381) umfasst, welche den Motor (210, 340) von beiden Seiten in einer zu der Drehachsenrichtung des Motors (210, 340) senkrechten Richtung einspannen.

2. Spritzgießmaschine nach Anspruch 1,
wobei das Motorstützwerkzeug einen Verbindungsabschnitt umfasst, der das Paar Spannabschnitte miteinander mit einem Abstand dazwischen verbindet, und
der Verbindungsabschnitt an der Befestigungsbasis angebracht ist.

3. Spritzgießmaschine nach Anspruch 2,
wobei das Motorstützwerkzeug einen Befestigungsabschnitt umfasst, der den Verbindungsabschnitt in der Drehachsenrichtung an der Befestigungsbasis befestigt.

4. Spritzgießmaschine nach einem der Ansprüche 1 bis 3,
wobei jeder der Spannabschnitte einen ersten Stützabschnitt, der an dem Motor befestigt ist, einen zweiten Stützabschnitt, der an der Befestigungsbasis befestigt ist, und einen Bindegliedabschnitt umfasst, der den ersten Stützabschnitt derart mit dem zweiten Stützabschnitt verbindet, dass Positionen des ersten Stützabschnitts und des zweiten Stützabschnitts in der senkrechten Achsrichtung, in der die Drehwelle des Motors und das Drehelement mit einem Abstand dazwischen angeordnet sind, eingestellt werden können.

5. Spritzgießmaschine nach Anspruch 4,
wobei der erste Stützabschnitt einen Positionierabschnitt umfasst, der den Motor und den ersten Stützabschnitt in der Drehachsenrichtung positioniert, indem er an den Motor montiert ist.

6. Spritzgießmaschine nach einem der Ansprüche 1 bis 5,
wobei die Befestigungsbasis einen Körperabschnitt und ein Paar vorstehender Abschnitte umfasst, die von dem Körperabschnitt in der senkrechten Achsrichtung vorstehen, in der die Drehwelle des Motors und das Drehelement mit einem Abstand dazwischen angeordnet sind, und
der Motor via eine Motorbefestigungsplatte an dem Paar vorstehender Abschnitte angebracht ist, und die Drehwelle des Motors zwischen dem Paar vorstehender Abschnitte angeordnet ist.

## Revendications

1. Une machine de moulage par injection comprenant :
un moteur (210, 340) comprenant un stator (342), un rotor (343) qui tourne par rapport au stator (342), et un encodeur (211, 341) qui détecte la rotation du rotor (343) ;
un élément rotatif (221, 330) disposé parallèlement à un arbre en rotation (218, 348) du moteur (210, 340) avec un espace par rapport au moteur (210, 340) dans une direction d'axe perpendiculaire à une direction d'axe de rotation du moteur (210, 340) ;
une courroie (228, 378) qui transmet une force d'entraînement de rotation de l'arbre en rotation (218, 348) du moteur (210, 340) à l'élément rotatif (221, 330) ;
une base de fixation (121, 304) sur laquelle le moteur (210, 340) est fixé,
**caractérisée par** un outil de support de moteur (280, 380) qui supporte le moteur par rapport à la base de fixation,
dans laquelle l'outil de support de moteur (210, 340) comprend une paire de parties de serrage (281, 381) qui serrent le moteur (210, 340) des deux côtés dans une direction perpendiculaire à la direction d'axe de rotation du moteur (210, 340).

2. La machine de moulage par injection selon la revendication 1,
dans laquelle l'outil de support de moteur comprend une partie de liaison qui relie les deux parties de serrage l'une à l'autre, avec un espace entre elles, et
la partie de raccordement est fixée sur la base de fixation.

3. La machine de moulage par injection selon la revendication 2,
dans laquelle l'outil de support de moteur comprend une partie de fixation qui fixe la partie de liaison sur la base de fixation dans la direction d'axe de rotation.

4. La machine de moulage par injection selon l'une quelconque des revendications 1 à 3,
dans laquelle chacune des parties de fixation comprend une première partie de support qui est fixée sur le moteur, une seconde partie de support qui est fixée sur la base de fixation, et une partie de liaison qui lie la première partie de support à la seconde partie de support de sorte que les positions de la première partie de support et de la seconde partie de support dans la direction perpendiculaire d'axe dans laquelle l'arbre en rotation du moteur et l'élément rotatif sont disposés avec un espace entre eux puissent être ajustées.

5. La machine de moulage par injection selon la revendication 4,
dans laquelle la première partie de support comprend une partie de positionnement qui positionne le moteur et la première partie de support dans la direction d'axe de rotation en étant fixée avec le moteur.

6. La machine de moulage par injection selon l'une quelconque des revendications 1 à 5,
dans laquelle la base de fixation comprend une partie de corps et une paire de parties en saillie qui dépassent de la partie de corps dans la direction perpendiculaire d'axe dans laquelle l'arbre en rotation du moteur et l'élément rotatif sont disposés avec un espace entre eux, et
le moteur est fixé sur la paire de parties en saillie via une plaque de fixation de moteur, et l'arbre en rotation du moteur est disposé entre la paire de parties en saillie.
